Europäisches Patentamt

(19) European Patent Office

Office européen des brevets

(11) Numéro de publication : **0 335 754 B1**

(12) **FASCICULE DE BREVET EUROPEEN**

(45) Date de publication du fascicule du brevet :
**19.06.91 Bulletin 91/25**

(21) Numéro de dépôt : **89400274.0**

(22) Date de dépôt : **01.02.89**

(51) Int. Cl.⁵ : **B01J 37/20**, B01J 27/049, C10G 49/26, C10G 49/12

(54) Procédé de présulfurisation et de contrôle de l'activité de catalyseur de traitement d'hydrocarbures.

(30) Priorité : **29.03.88 FR 8804253**

(43) Date de publication de la demande :
**04.10.89 Bulletin 89/40**

(45) Mention de la délivrance du brevet :
**19.06.91 Bulletin 91/25**

(84) Etats contractants désignés :
**AT BE CH DE FR GB IT LI LU NL SE**

(56) Documents cités :
EP-A- 0 181 254
US-A- 4 048 058
US-A- 4 725 569
US-A- 4 725 571

(73) Titulaire : **EURECAT EUROPEENNE DE RETRAITEMENT DE CATALYSEURS**
Quai Jean Jaurès B.P. 45
F-07800 La Voulte-sur-Rhône (FR)

(72) Inventeur : **Berrebi, Georges**
17, rue Barnave
F-26500 Bourg les Valence (FR)
Inventeur : **Dufresne, Pierre**
67, rue Georges Sand
F-92500 Rueil Malmaison (FR)

(74) Mandataire : **Andreeff, François et al**
**INSTITUT FRANCAIS DU PETROLE 4, avenue de Bois-Préau**
F-92502 Rueil-Malmaison (FR)

## Description

La présente invention concerne un procédé de présulfuration de catalyseur de traitement d'hydrocarbures et/ou préconditionnement d'un catalyseur pour être ensuite présulfuré. L'invention apporte un perfectionnement aux brevets européens de la demanderesse EP-B 130850 et EP-B 181254 auxquels on se référera pour l'illustration de la technique.

On rappellera brièvement que souvent l'agent de sulfuration utilisé est dans l'art antérieur soit de l'hydrogène sulfuré pur ou dilué par de l'hydrogène ou par des hydrocarbures gazeux, soit encore du diméthyldisulfure dilué par de l'hydrogène, ou d'autres composés sulfurés tels que des sulfures d'alkyle ou des alkylmercaptans, dilués par de l'hydrogène (voir US-A- 4,172,027).

Les métaux des catalyseurs utilisés en raffinage, hydroraffinage ou en pétrochimie, qu'ils soient neufs ou régénérés, sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur préalablement à sa mise en oeuvre.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce qu'ont permis les procédés efficaces de brevets européens EP.A. 130850 et 181254 dans lesquels un composé sulfuré est incorporé dans la masse catalytique, lequel composé, provoque la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène.

D'une façon plus précise, dans le brevet européen EP.B.130850, le procédé de sulfuration du catalyseur est caractérisé par une étape préliminaire dite d'incorporation dans la masse catalytique, d'un composé sulfuré de nature particulière.

L'étape préliminaire d'introduction d'un composé sulfuré, qu'arbitrairement on appelle prétraitement "hors site" ou "ex situ", qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrit arbitrairement "in situ") c'est-à-dire en tête des réacteurs ou dans des zones plus ou moins en communication directe avec ces réacteurs, nécessitant d'opérer dans des conditions opératoires, (température, pression ou autres), imposées au moins en partie par les conditions opératoires des réacteurs eux mêmes ou des annexes de ces réacteurs (zone d'hydrogénation préalable du catalyseur par exemple).

Le procédé d'EP.B.181254 permet, lorsque le catalyseur sera soumis dès son démarrage de préférence sur le site ("in situ") à la réaction classique d'activation en présence d'hydrogène, (généralement au dessus de 100°C), de procéder, ensuite grâce à la présence d'hydrogène sur le site, à la sulfuration au taux requis, stoechiométrique ou non stoechiométrique, du ou des métaux actifs entrant dans la composition du catalyseur. Le procédé consiste à incorporer, dans une première étape en l'absence d'hydrogène, dans la poro-sité du catalyseur neuf ou régénéré au moins un agent de sulfuration, l'agent de sulfuration étant un polysulfure de formule générale :

$$R - S_{(n)} - R'.$$

Ledit agent de sulfuration est utilisé en solution dans un solvant.

Dans la deuxième étape, réalisée "in situ", et de préférence au-dessus de 150°C, on procède à une étape d'activation du catalyseur effectuée en présence d'hydrogène, la quantité requise de soufre se fixant grâce à la présence d'hydrogène, sur le ou les métaux entrant dans la composition dudit catalyseur.

Dans le polysulfure de formule :

$$R - S_{(n)} - R'$$

n est un nombre entier de 3 à 20, de préférence de 4 à 8 et plus particulièrement de 5 à 7 ; R et R', identiques ou différents, représentent des radicaux organiques renfermant chacun 1 à 150 atomes de carbone par molécule, de préférence soit 10 à 60 atomes de carbone soit à 40 atomes de carbone et plus particulièrement 7 à 16, ces radicaux étant choisis dans le groupe constitué par les radicaux alkyles, c'est-à-dire, saturés ou insaturés, linéaires ou ramifiés ou de type naphténique, les radicaux aryles, les radicaux alkylaryles et les radicaux arylalkyles, ces divers radicaux pouvant comporter au moins un hétéro-atome. R' éventuellement peut également être un atome d'hydrogène.

2

On peut citer, à titre d'exemple préféré de polysulfure, le ditertiododécylpolysulfure (n = 5) où R et R' sont chacun un radical dodécyle.

Ce produit est commercialisé par exemple par ELF AQUITAINE sous le nom TPS 32, notamment parce qu'il contient 32% poids environ de soufre.

On peut citer également le ditertiononylpolysulfure (n = 5) où R et R' sont chacun un radical tertio-nonyle.

Ce produit est commercialisé par ELF AQUITAINE sous le nom TPS 37, notamment parce qu'il contient 37% poids environ de soufre ou par PENNWALT sous le nom de TNPS.

Pour des raisons de procédure, on peut évidemment utiliser ces agents de sulfuration du type polysulfure seuls ou en mélange entre eux dans des proportions judicieusement choisies.

La première étape rappelée ci-dessus est effectuée en l'absence d'hydrogène et permet d'obtenir avec une très grande précision le degré de sulfuration total ou partiel demandé par l'utilisateur. Cette incorporation de soufre est effectuée entre 0 et 50°C et de préférence entre 10 et 35°C et de préférence encore à la température ambiante.

L'agent de sulfuration est utilisé, dilué dans un solvant adéquat qui dépend notamment de la nature de l'agent de sulfuration c'est-à-dire de R et R', radicaux qui déterminent la teneur en soufre incorporé dans le catalyseur généralement par capillarité ou par porosité. Les processus de sulfuration varient en fait selon les coupes à traiter ultérieurement en présence des catalyseurs traités conformément à l'invention.

A l'issue de cette première étape, on procède à une deuxième étape qui est scindée en deux parties :

La première partie de cette deuxième étape est effectuée in-situ ou ex-situ. La première partie de la deuxième étape est effectuée en l'absence d'hydrogène. Elle est effectuée en présence d'air ou d'un gaz inerte. Selon une méthode préférée, elle est effectuée en présence d'au moins de la vapeur d'eau ou d'au moins de l'air humide ou un gaz inerte humide pendant au moins 5 minutes environ, "in-situ" ou "ex-situ" à une température comprise entre environ 65 et 275°C sous une pression comprise entre environ 0,5 et 70 bars (0,05 et 7 MPa), le catalyseur étant ensuite séché.

De préférence on peut opérer pendant au moins 5 minutes et de préférence au plus 10 heures entre 65 et 265°C, sous un pression comprise entre 0,5 et 70 bars (0,05 et 7 MPa), de préférence entre 85 et 260°C et plus particulièrement entre 95 et 150°C.

Lorsque l'on travaille en présence de vapeur d'eau, celle-ci doit être surchauffée à une température supérieure à 110°C.

Lorsque l'on opère en présence de gaz inerte humide ou d'air humide, il convient d'opérer avec une humidité relative de l'ordre de 2 à 60% en volume à l'étape de séchage, et à une température comprise entre 105 et 200°C, de préférence entre 110 et 170°C. On peut encore utiliser un gaz dont la teneur en eau est comprise entre 50 et 100% (vapeur d'eau pure), de préférence entre 90 et 100% et opérer entre 5 minutes et 10 heures sous 0,05 à 7 MPa à une température inférieure à 200°C, de préférence inférieure à 170°C.

Ultérieurement, sur le site ou à proximité du site (sur lequel le catalyseur sera utilisé pour le traitement de diverses charges), lors de la réaction classique d'activation, effectuée en présence d'hydrogène (deuxième étape du procédé de la demande de brevet européen EP.B. 181 254), l'agent de sulfuration introduit dans le catalyseur en quantités prédéterminées, sera capable de donner naissance à de l'hydrogène sulfuré lequel, en présence d'hydrogène, conduira au sulfure ou aux sulfures désirés du ou des métaux présents dans le catalyseur.

Au cours de la deuxième étape, le catalyseur est porté soit à une température égale à au moins 275°C, pendant au moins 1 minute.

La deuxième partie de la deuxième étape est généralement effectuée in-situ et peut donc se confondre avec le démarrage ou la mise en marche proprement dite de la réaction de raffinage et de pétrochimie pour laquelle est conçu le catalyseur préparé selon la présente invention, dans le cas précisement où une telle réaction est faite au-dessus de 275°C.

Lorsque la température choisie pour la réaction de raffinage ou de pétrochimie est inférieure à 275°C (par exemple, ce peut être le cas des hydrodésulfurations d'essences ou de kérosènes), il suffit alors d'abaisser la température utilisée pour l'activation du catalyseur dans la deuxième partie de la deuxième étape après cette étape à la température convenable pour la réaction de raffinage ou de pétrochimie.

On a constaté que dans la première partie de la deuxième étape, en dépit de l'absence d'hydrogène, le catalyseur se sulfure, c'est-à-dire, que les oxydes des métaux actifs du catalyseur se transforment en sulfures. Ce phénomène s'observe aisément par analyse du catalyseur, lequel d'ailleurs devient noir. Par contre, des tests de chimisorption montrent que tant que le catalyseur n'atteint pas la température de 275°C et ne reste pas au moins quelques minutes à au moins 275°C, ce catalyseur reste démuni d'activité catalytique.

L'invention est un perfectionnement des méthodes rappelées ci-dessous.

L'invention concerne un procédé de traitement en deux étapes d'un catalyseur neuf ou régénéré renfermant (a) un support à base d'au moins un oxyde d'un métal ou d'un métallöide et (b) au moins un métal actif, procédé dans lequel, dans une première étape réalisée "ex-situ" entre 0 et 50°C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$$R - S_{(n)} - R'$$

où n est un nombre entier de 3 à 20 et où R' représente un atome d'hydrogène ou un autre radical identique ou différent du radical R, ces deux radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, ledit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode dans laquelle on traite le catalyseur, en l'absence d'hydrogène et en présence d'au moins de la vapeur d'eau ou d'au moins un gaz inerte humide ou d'air humide pendant au moins 5 minutes environ, "in-situ" ou ex-situ", à une température comprise entre 65 et 275°C, sous une pression comprise entre environ 0,5 et 70 bars (0,05 et 7 MPa), le catalyseur étant à ce stade éventuellement séché avant son utilisation en raffinage notamment, on traite ensuite ce catalyseur (deuxième partie de la deuxième étape), pendant au moins 1 minute environ à une température d'au moins 275°C, en présence d'hydrogène. Le procédé étant caractérisé en ce que au cours de la première étape on ajoute en poids, 0,1 à 10% d'au moins un composé azoté, poids exprimé en azote, par rapport au poids de polysulfure ou des polysulfures. On peut incorporer ainsi à titre d'exemple de l'ordre de 0,1 à 20% d'additif sur le catalyseur.

L'invention convient particulièrement bien pour les catalyseurs de craquage et d'hydrocraquage d'hydrocarbures et plus généralement pour les réactions de conversion d'hydrocarbures et pour les opérations de raffinage.

Dans la présente invention, on effectue la première étape du procédé de traitement de catalyseur, c'est-à-dire, l'incorporation "ex-situ" du polysulfure dans la porosité du catalyseur, en présence d'au moins un additif qui est un composé azoté organique ou minéral pouvant fournir de l'ammoniac qui dans les conditions de la première étape et de la première partie de la seconde étape va se déposer au moins partiellement sur le catalyseur. On a en effet constaté que l'ammoniac ainsi déposé sur le catalyseur va limiter l'activité du catalyseur, c'est-à-dire, passiver ce catalyseur.

Ultérieurement, lorsque le catalyseur sera mis au contact d'hydrogène dans le catalyseur de raffinage ou de pétrochimie, l'ammoniac se désorbera et le catalyseur retrouvera alors toute son activité. Le procédé selon l'invention permet ainsi un meilleur contrôle de tout le procédé de prétraitement du catalyseur et même une légère amélioration de l'activité du catalyseur. Le procédé selon l'invention implique que la première partie de la première étape soit effectuée en présence au moins de vapeur d'eau ou au moins d'un gaz inerte humide, notamment de l'air humide.

Ainsi conformément à l'invention, on pourra utiliser dans la deuxième étape (a) soit de la vapeur d'eau, (b) soit de l'air humide, (c) soit un mélange de vapeur d'eau ou d'air humide et d'un gaz inerte ou non.

On opérera pendant au moins 5 minutes et de préférence au plus 10 heures entre 65 et 265°C, sous un pression comprise entre 0,5 et 70 bars (0,05 et 7 MPa), de préférence entre 85 et 260°C et plus particulièrement entre 95 et 150°C.

Lorsque l'on travaille en présence de vapeur d'eau, celle-ci doit être surchauffée à une température supérieure à 110°C.

Lorsque l'on opère en présence de gaz inerte humide ou d'air humide, il convient d'opérer avec une humidité relative de l'ordre de 2 à 60% en volume à l'étape de séchage, et à une température comprise entre 105 et 200°C, de préférence entre 110 et 170°C. On peut encore utiliser un gaz dont la teneur en eau est comprise entre 50 et 100% (vapeur d'eau pure), de préférence entre 90 et 100% et opérer entre 5 minutes et 10 heures sous 0,05 à 7 MPa à une température inférieure à 200°C, de préférence inférieure à 170°C.

Bref, au cours de la première partie de la deuxième étape, les oxydes des métaux actifs se transforment en sulfures, l'activité catalytique de ces sulfures ne se manifestant que lorsque le catalyseur atteindra 275°C environ, en présence d'hydrogène (deuxième partie de la deuxième étape).

Dans la présente invention, on a donc constaté qu'il était intéressant, au cours de la première étape, d'opérer en présence d'au moins un composé azoté. Ce composé azoté est choisi de préférence dans le groupe constitué par les composés ammoniaqués organiques ou minéraux, les composés ammonium quaternaire, l'ammoniac et ses dérivés, les nitrites, les composés nitrile ammonium, les dérivés nitrés, les composés nitreux et nitrosés, les composés nitro aromatiques tel le nitro benzène, les amines primaires, secondaires et tertiaires, les diamines et polyamines, les dites amines étant des alkylamines, des arylaminés et des alkylaryl ou ary-

4

lalkylaminés, par exemple on citera les dérivés triméthylphényl ammonium. On peut citer, parmi les arylamines, l'aniline, la mono et diméthylaniline, le diméthylaniline, la diphénylamine, la triphénylamine.

On peut utiliser également les toluidines ortho, méta ou para, les naphtylamines (notamment l'alpha ou le béta naphtylamine), les composés diazoïques et les azoïques, les composés hydrazoïques, les phénylhydrazines. On peut utiliser également les polyamines aliphatiques et aromatiques, les diamines dérivées du benzène (phénylène diamines), la benzidine, etc., les amides substitués ou non, bisubstitués à l'azote (diacylamides et triacylamides), les amidines, les nitriles, les uréthènes, l'urée, les urées substituées, les amino-urées (semi-carbazides), l'amidinothiourée, les thiourées, les guanidines, les cyanamides, les phénol nitrés, les amino alcools, les amino phénols, les acides aminés, les composés azotés hétérocycliques, par exemple, les pyrroles et ses homologues, les pyrrolines et leurs homologues, les pyrrolidines et leurs homologues, les polypyrroles, les dipyrrylméthanes, les porphyrines, les indoles ou benzopyrroles, les hydroxy-indoles ou céto-indolines, les composés poly-indoliques, les composés du groupe de l'iso-indole, du carbazole (dibenzopyrrole), la piperidine et ses composés, la pyridine et ses composés tels que les alkylpyridines (picoline, lutidine, etc.) les pyridones, la piperidine et dérivés, les polypyridine (quinoleïne et dérivés, la quinaldine, l'acide quinoléique et ses homologues, les acridines, l'isoquinoleïne, les pyrazoles et dérivés (pyrazolines, pyrazolones), les glyoxalines ou ididazoles, les furazannes, les triazoles, le 3,amino 5 mercapto 1,2,4 Triazole, les benzotriazoles (ou azimide), la tétrazole, les diazines, notamment les ortho, para et méta pyridazines, le pyridazine, les pyrimidines (dont l'uracile), les pyrazines, les pipérazines, les dicéto-pipérazines, les triazines, notamment l'acide cyanurique et les tétrazines, le 2,5 Diamercapto 1,3,4 thiadiazole,les composés à cycle pyrimidinique condensé au cycle imidazole (acide urique par exemple), les alcaloïdes aminés, etc. et d'une façon générale tous les composés azotés pouvant fournir de l'ammoniac.

On utilisera, en poids, avantageusement 0,1 à 10% de composé azoté, poids exprimé en azote, de préférence 0,2 à 5% et plus particulièrement 0,9 à 1,2% du ou des composés azotés choisis, par rapport au poids du polysulfure ou des polysulfures utilisés.

Le ou les additifs peuvent être ajoutés, par exemple, avec la solution du ou des polysulfures utilisés, soit à l'état pur, soit dissous dans un solvant adéquat. Ce solvant peut être du même type que le solvant choisi pour dissoudre le polysulfure, à savoir, par exemple :

– une essence légère bouillant par exemple entre environ 60 à 95°C,

– une essence de type hexane bouillant entre 63 et 68°C environ,

– une essence de type F bouillant entre environ 100 et 160°C et contenant généralement 10 à 20% d'hydrocarbures aromatiques, par exemple 15% (en volume),

– une essence du type "white spirit" bouillant entre environ 150 et 250°C et renfermant généralement 14 à 22% d'hydrocarbures aromatiques, par exemple 17%, en volume,

– toute coupe hydrocarbonée ou non, équivalente aux essences précédentes.

Le ou les composés azotés selon l'invention, peuvent être utilisés dans un autre solvant adéquat tel que, par exemple, l'eau, les alcools (méthanol, éthanol, propanol, etc.) ou d'autres liquides minéraux ou organiques connus pour dissoudre les composés azotés choisis.

<u>EXEMPLES :</u>

Dans les exemples qui vont suivre, on va étudier, pour un hydroraffinage d'une coupe hydrocarbonée l'incidence de la méthode de régénération de catalyseur adoptée.

La coupe que l'on se propose d'hydroraffiner est une charge modèle renfermant en poids :

20% de toluène

2% de thiophène

78% de cyclohexane

Les conditions opératoires sont les suivantes :

Température : 350°C

Pression totale : 60 bars (6 MPa)

VVH (vitesse spatiale) : 2 litres charge/litre catalyseur/heure

H2/HC (Hydrogène/hydrocarbures : 350 l/h

Durée du traitement : 48 heures

Volume du catalyseur mis en jeu : 40 cm³ dans les 3 exemples 1 à 3 en vue de déterminer la voie donnant les meilleures performances.

L'analyse des effluents est effectuée par chromatographie en phase gazeuse. On mesurera dans chaque test l'activité en hydrogénation ("A") du toluène et l'activité en isomérisation ("I") du cyclohexane en méthylcyclopentane ;

$$A = Log \frac{1}{1 - X}$$

(logarithme népérien) où X est le taux de conversion du toluène, c'est-à-dire,

$$X = \frac{\sum P}{\sum T}$$

$\Sigma$ P représentant la somme des titres molaires des produits de conversion du toluène (méthylcyclohexane, éthylcyclopentane et les diméthylcyclopentanes) et $\Sigma$ T représentant la somme $\Sigma$ P + titre de toluène résiduel.

X est compris entre 0 et 1, X étant égal à 1 pour une conversion à 100% du toluène.

$$I = 100 \times \frac{\text{Titre molaire du méthylcyclopentane}}{(\text{Titre molaire en méthylcyclopentane} + \text{titre molaire en cyclohexane résiduel})}$$

(l'activité en isomérisation I permet de mesurer l'acidité du catalyseur).

Le catalyseur utilisé est un catalyseur commercial de la société Procatalyse HR 346 renfermant en poids 3% d'oxyde de Nickel NiO et 14% d'oxyde de molybdène MoO3, ces composés de métaux actifs étant déposés sur une alumine. On a aussi utilisé un catalyseur commercial de la Société PROCATALYSE : HYC 642 renfermant des oxydes de nickel et de molybdène sur un support zéolitique.

D'autres catalyseurs d'hydrocraking sur support zéolithique tels que HTY ou S 5030 de la Société SHELL CHEMICAL ou encore les HC 14, HC 16 ou HC 22 de la Société UNOCAL (catalyseurs à base d'oxydes de nickel et de molybdène ou d'oxydes de nickel et de tungstène) ont notamment été utilisés.

Exemple 1 : (comparatif)

Dans cet exemple, on procède à une sulfuration du catalyseur en opérant selon la méthode du brevet européen EP-B-181254 en deux étapes :

Première étape :

On utilise pour la présulfuration du catalyseur, le TPS 37, fabriqué par ELF AQUITAINE et renfermant environ 37% en poids de soufre environ, (la formule a été donnée dans la partie générale de cette demande de brevet) ; pour que l'ensemble du polysulfure soit adsorbé, il faut utiliser un volume de réactif (polysulfure + solvant du polysulfure) égal au volume d'imprégnation de la charge de catalyseur traité. C'est la connaissance de ce volume poreux total, ou volume d'imprégnation, qui détermine la quantité de solvant à utiliser. Dans le cadre du présent essai, ce volume, pour 100 g de catalyseur, est de 45 ml en moyenne (dont 60% de solvant et 40% de polysulfure). Le solvant utilisé est un White Spirit (température d'ébullition entre 150 et 250°C).

On utilise la stoechiométrie en soufre nécessaire pour sulfurer ultérieurement la totalité des oxydes (NiO, MoO3) soit 7,1% S. On procède ainsi à l'imprégnation à sec du catalyseur, suivie d'une évaporation sous 10 mm de mercure (13 600 Pa) ou sous courant de gaz inerte.

Deuxième étape :

1. Première partie de la deuxième étape :
Le catalyseur est introduit dans le réacteur. On met le réacteur sous la pression d'un bar en présence d'air. (On obtiendrait les mêmes résultats sous une pression plus élevée, par exemple 60 bars). On chauffe le catalyseur pendant 1 heure.
On opère un test Tc réalisé à 150°C.
Le catalyseur devient noir, avec dépôt d'eau. Le $SO_2$ dans les effluents gazeux est mesuré à l'aide d'un analyseur infrarouge de marque COSMA.
La teneur en soufre en poids, dans le catalyseur après le test est le suivant :

% S = 5,95

2. Deuxième partie de la deuxième étape et tests d'hydroraffinage :
On met le réacteur sous atmosphère d'hydrogène, à froid. La pression est portée à 60 bars et la température à 150°C.
Les tests d'hydroraffinage sont effectué comme suit : on procède à l'injection de la charge à convertir puis on porte la température à 300°C pendant 1 heure puis à 350°C pour le test.
Les résultats obtenus sont donnés dans le tableau ci-dessous

|   | Tc | T'c |
|---|---|---|
| A | 0,83 | 1,10 |
| I | 0,74 | 1,03 |

Pendant la première partie de la deuxième étape, on opère également non pas en présence d'air mais avec un mélange de 5% en volume d'air d'une part et de 95% en volume de vapeur d'eau initialement surchauffée à 115°C d'autre part (essai T'c).

Exemple 2 (selon l'invention) :

On procède comme dans l'exemple 1. Toutefois, la première étape est effectuée ici en présence d'aniline.
On utilise 1% en poids d'azote par rapport au polysulfure organique. Comme on utilise 40 grammes environ de polysulfure, on utilise une quantité d'aniline fournissant 0,4 gramme d'azote, soit, puisque la masse moléculaire d'aniline est 93 et le poids atomique de l'azote 14 : $\dfrac{93 \times 0,4}{14}$ = 2,66 grammes d'aniline (0,029 mole)
Ces 2,66 grammes d'aniline sont ajoutés dans le white spirit qui sert de solvant au polysulfure organique.
Les résultats des tests $T_1c$ (correspondant à Tc dans l'exemple comparatif) et $T_1'c$ (correspondant à T'c dans l'exemple comparatif) sont les suivants :

|   | $T_1c$ | $T_1'c$ |
|---|---|---|
| A | 0,81 | 1,16 |
| I | 0,62 | 1,07 |

Ces résultats montrent d'une part que la technique selon l'invention est efficace quand la première partie de la deuxième étape est effectuée en présence d'eau mais d'autre part, que cette même technique est mauvaise quand on n'opère pas en présence d'eau et donne même des résultats légèrement inférieurs à ceux obtenus dans EP-B-181254.

## Revendications

1. Procédé de traitement en deux étapes d'un catalyseur neuf ou régénéré renfermant (a) un support à base d'au moins un oxyde d'un métal ou d'un métalloïde et (b) au moins un métal actif, procédé dans lequel, dans une première étape réalisée "ex-situ" entre 0 et 50°C environ et en l'absence d'hydrogène, on traite le catalyseur à l'aide d'au moins un agent de sulfuration de façon à incorporer partiellement ou totalement cet agent dans la porosité du catalyseur, l'agent de sulfuration étant un polysulfure de formule générale :

$$R - S_{(n)} - R'$$

où n est un nombre entier de 3 à 20 et où R' représente un atome d'hydrogène ou un autre radical identique ou différent du radical R, ces 2 radicaux représentant ainsi chacun un radical organique renfermant 1 à 150 atomes de carbone par molécule, ces radicaux étant choisis dans le groupe constitué par les radicaux alkyles, c'est-à-dire, saturés ou insaturés linéaires ou ramifiés ou de type naphténique, les radicaux aryles, les radicaux alkylaryles et les radicaux arylalkyles, ledit agent de sulfuration étant utilisé en solution dans un solvant, le catalyseur étant ensuite éventuellement séché, procédé dans lequel ensuite, dans une deuxième étape, on traite le catalyseur obtenu en première étape par une méthode dans laquelle on traite le catalyseur, en l'absence d'hydrogène et en présence d'au moins de la vapeur d'eau ou d'au moins de l'air humide ou un gaz inerte humide pendant au moins 5 minutes environ, "in-situ" ou "ex-situ", à une température compris entre 65 et 275°C, sous une pression comprise entre environ 0,5 et 70 bars (0,05 et 7 MPa), le catalyseur étant à ce stade éventuellement séché, on traite ensuite ce catalyseur (deuxième partie de la deuxième étape), pendant au moins 1 minute environ à une température d'au moins 275°C, en présence d'hydrogène, le procédé étant caractérisé en ce que au cours de la première étape on ajoute en poids, 0,1 à 10% d'au moins un composé azoté, poids exprimé en azote, par rapport au poids de polysulfure ou des polysulfures.

2. Procédé selon la revendication 1 dans lequel au cours de ladite deuxième étape, on opère en présence d'un gaz inerte humide ou d'air humide avec une humidité relative de l'ordre de 2 à 60% en volume, à une température comprise entre 105 et 200°C.

3. Procédé selon la revendication 2 dans lequel la température de ladite deuxième étape est comprise entre 110 et 170°C, la durée de cette deuxième étape étant comprise entre 5 minutes et 10 heures environ.

4. Procédé selon la revendication 1 dans lequel au cours de ladite deuxième étape, on opère pendant une période de temps comprise entre 5 minutes et 10 heures, à une température inférieure à 200°C, en présence d'un gaz humide inerte dont la teneur en eau est comprise entre 50 et 100% (vapeur d'eau pure).

5. Procédé selon l'une des revendication 2 à 4 dans lequel au cours de ladite deuxième étape, ledit gaz est de l'air humide.

6. Procédé selon la revendication 1 dans lequel dans la deuxième étape on utilise au moins de la vapeur d'eau surchauffée à une température supérieure à 110°C.

7. Procédé selon l'une des revendications 1 à 6 dans lequel ledit composé azoté est choisi dans le groupe constitué par les composés ammoniaqués organiques ou minéraux, les composés ammonium quaternaire, l'ammoniac et ses dérivés, les nitrites, les composés nitrile ammonium, les dérivés nitrés, les composés nitreux et nitrosés, les composés nitro-aromatiques, les amines primaires, secondaires et tertiaires, les diamines et polyamines, les toluidines, les naphtylamines, les composés diazoïques et les azoïques, les composés hydrazoïques, les phenylhydrazines, les polyamines, les diamines dérivés du benzène, les amides, les amidines, les nitriles, les uréthanes, l'urée, les urées substituées, les amino-urées, les thio-urées, les guanidines, les cyanamides, les phénol nitrés, les amino-alcools, les amino phénols, les acides aminées, les composés azotés hétérocycliques.

8. Procédé selon la revendication 7 dans lequel ledit composé azoté est une amine primaire, secondaire ou tertiaire choisie dans le groupe constitué par les alkylamines, les arylamines, les alkylarylamines et les arylalkylamines.

9. Procédé selon la revendication 8 dans lequel le composé azoté est choisi dans le groupe constitué par la monométhylaniline, la diméthylaniline, l'aniline, la diphénylamine, la triphénylamine et les dérivés triméthyl phényl ammonium.

10. Procédé selon la revendication 7 dans lequel les composés hétérocycliques sont choisis dans le groupe

EP 0 335 754 B1

constitué par les pyrroles et ses homologues, les pyrrolines et leurs homologues, les pyrrolidines et leurs homologues, les polypyrroles, les dipyrrylméthanes, les porphyrines, les indoles ou benzopyrroles, les hydroxy-indoles ou céto-indolines, les composés polyindoliques, les composés du groupe de l'iso-indole, du carbazole (dibenzopyrrole), la piperidine et ses composés, le pyridine et les composés alkyl-pyridines, les pyridones, la piperidine et dérivés, les polypyridine, la quinaldine, l'acide quinoléique et ses homologues, les acridines, l'isoquinoleïne, les pyrazoles et dérivés, les glyoxalines, les furazannes, les triazoles, les benzotriazoles, la tétrazole, les diazines, les pyridazine, les pyrimidines, les pyrazines, les pipérazines, les dicéto-pipérazines, les triazines, les composés à cycle pyrimidinique condensé au cycle imidazole et les alcaloïdes.

11. Procédé selon l'une des revendications 1 à 10 appliqué soit au traitement d'un catalyseur neuf, préalablement à son emploi, soit appliqué au traitement d'un catalyseur, préalablement à son emploi, ledit catalyseur venant d'être soumis à une régénération hors site.

12. Procédé selon l'une des revendications 1 à 11 appliqué à des catalyseurs notamment d'hydrocraquage, de craquage et des conversions d'hydrocarbures.

## Ansprüche

1. Zweistufen-Verfahren zur Behandlung eines frischen oder regenerierten Katalysators, welcher ein Träger auf Grundlage mindestens eines Metaloxids oder Metalloidoxids (a) oder mindestens eines aktiven Metalls (b) aufweist, dadurch gekennzeichnet, daß in einer ersten "Ex-situ" durchgeführten Stufe, bei Temperaturen von etwa 0 bis 50°C und in Anwesenheit von Wasserstoff, der Katalysator mittels eines Schwefelungsmittels der Art behandelt wird, daß ein partieller oder totaler Einschluß dieses Schwefelungsmittels in den Katalysatorporen bewirkt wird, wobei das Schwefelungsmittel ein Polysulfid der nachstehenden allgemeinen Formel ist:

$$R - S_{(n)} - R'$$

in der
n, eine Zahl von 3 bis 20 bedeutet und R', ein Wasserstoffatom oder ein mit R identisches oder verschiedenes organisches Radikal mit 1 bis 150 Kohlenstoffatomen pro Molekül darstellt, wobei diese Radikale der Gruppe der Alkyl-Radikale angehören, d. h. gesättigte Radikale sind oder ungesättigte, lineare oder verzweigte oder naphtenische Radikale, wie Aryl-,Alkylaryl, – und Arylalkyl-Radikal, das Schwefelungsmittel in ein Lösungsmittel gelöst wird, der Katalysator gegebenenfalls getrocknet wird, dadurch gekennzeichnet, daß in einer zweiten Stufe, der in der ersten Stufe gewonnene Katalysator behandelt wird, in Abwesenheit von Wasserstoff und zumindest in Anwesenheit von Wasserdampf oder feuchter Luft oder eines feuchten Inertgases, innerhalb von mindestens 5 Minuten, "In-situ" oder "Ex-situ", bei einer Temperatur zwischen 65 und 275°C und einem Druck von etwa 0,5-70 bar (0,05-7 MPa), wobei der Katalysator in diesem Stadium gegebenenfalls getrocknet wird und wobei derselbe anschließend, in einer 2. Teilstufe der zweiten Stufe innerhalb von etwa einer Minute, bei einer Temperatur von mindestens 275°C, in Anwesenheit von Wasserstoff behandelt wird, und dadurch gekennzeichnet, daß während der ersten Stufe 0,1 bis 10 Gew.-% mindestens einer stickstoffhaltigen Verbindung zugibt, Gew.-% ausgedrückt in Stickstoff bezogen auf das Gewicht des Polysulfids oder der Polysulfide.

2. Verfahren nach Anspruch 1, dadurch gekennzeichnet, daß während der zweiten Stufe in Anwesenheit eines feuchten Inertgases oder feuchter Luft, mit einer relativen Feuchtigkeit in der Größenordnung von 2 bis 60 Vol.-% und bei Temperaturen zwischen 105 und 200°C gearbeitet wird.

3. Verfahren nach Anspruch 2, dadurch gekennzeichnet, daß die Temperatur der zweiten Stufe zwischen 110 und 170°C liegt und daß der Aufenthalt in dieser Stufe zwischen 5 Minuten und etwa 10 Stunden dauert.

4. Verfahren nach Anspruch 1, dadurch gekennzeichnet, daß während der zweiten Stufe über einen Zeitraum von 5 Minuten bis 10 Stunden gearbeitet wird, bei einer Temperatur unterhalb 200°C, in Anwesenheit eines feuchten Inertgases, dessen Wassergehalt zwischen 50 und 100% liegt (reiner Wasserdampf).

5. Verfahren nach einem der Ansprüche 2 bis 4, dadurch gekennzeichnet, daß in der zweiten Stufe, das Gas feuchte Luft ist.

6. Verfahren nach Anspruch 1, dadurch gekennzeichnet, daß in der zweiten Stufe mindestens überhitzter Wasserdampf verwendet wird, bei einer Temperatur oberhalb 110°C.

7. Verfahren nach einem der Ansprüche 1 bis 6, dadurch gekennzeichnet, daß die stickstoffhaltige Verbindung aus der Gruppe der organischen oder anorganischen ammoniakhaltigen Verbindungen ausgewählt wird, und zwar aus quaternären Ammoniumverbindungen, aus Ammoniak und seinen Derivaten, den Nitriten, Nitrosoaminen, den Nitroderivaten, den Nitro- und Nitrosoverbindungen, den aromatischen Nitroverbindungen, den primären, sekundären und tertiären Aminen, den Diaminen und Polyaminen, den Toluidinen, den Naphtylaminen, den Diazo- und azo-Verbindungen, den Hydrazo-Verbindungen, den Phenylhydrazonen, den Poly-

9

aminen, den Diaminderivaten des Benzols, den Amiden, den Nitrilen, den Urethanen, den Harnstoffen, den substituierten Harnstoffen, den Amino-Harnstoffen, den Thioharnstoffen, den Guanidinen, den Cyanamiden, den Nitro-Phenolen, den Amino-Alkoholen, den Amino-Phenolen, den Aminosäuren, den heterozyklischen stickstoffhaltigen Verbindungen.

8. Verfahren nach Anspruch 7, dadurch gekennzeichnet, daß die stickstoffhaltige Verbindung ein primäres, sekundäres oder tertiäres Amin aus der Gruppe der Alkylamine, Arylamine, Alkylarylamine und Arylalkylamine ist.

9. Verfahren nach Anspruch 8, dadurch gekennzeichnet, daß die stickstoffhaltige Verbindung aus der Gruppe des Monomethylanilins, Demethylanilins, des Anilins, des Diphenylamins, des Triphenylamins und der Derivate Trimethyl-Phenyl-Ammonium ausgwählt wird.

10. Verfahren nach Anspruch 7, dadurch gekennzeichnet, daß heterozyklischen Komponenten, aus der Gruppe der Pyrole und ihren Homologen, der Pyroline und ihren Homologen der Pyrolidine der Dipyrryl-Methane der Porphyrine, der Indole und Benzopyrrole, der Hydroxilndole oder Ceto-Indoline, der Polyindolin-Verbindungen, der Verbindungen Iso-Indole, des Carbazols, (Dibenzopyrrols), des Piperidins und seinen Verbindungen, des Pyridins und der Alkyl-Pyridine, der Pyridole, des Piperidins und seinen Derivaten, der Polypiridine des Chinaldins, der Chinolinsäure und seinen Homologen, des Akridin, des Isochinoleins, der Glyoxaline, der Furazane, der Triazole, der Benzotriazole, der Tetrazole, der Benzotriazole, der Tetrazole, der Diazine, der Pyridazine, der Pyrimidine, der Pyrazine, der Piperozine der Dicet-Piperazine, der Triazine, der zyklischen kondensierten Pyrimidinverbindungen mit Imidazol-Zyklen und der Alkaloide.

11. Verfahren nach einem der Ansprüche 1 bis 10, angewendet zur Behandlung eines frischen Katalysators vor seinem Gebrauch oder zur Behandlung eines Katalysators vor seinem Gebrauch, wobei der Katalysator einer Regeneration unterzogen wird.

12. Verfahren nach den Ansprüche 1 bis 11, angewendet insbesondere für Katalysatoren in Hydrokracken und- Krackenprozessen und für Katalysatoren in den Prozessen zur Umwandlung von Kohlenwasserstoffen.

## Claims

1. A two-stage process for treating a new or regenerated catalyst containing (a) a support based on at least one oxide of a metal or a metalloid and (b) at least one active metal, in which, in a first stage performed ex situ between about 0 and 50°C and in the absence of hydrogen, the catalyst is treated with at least one sulphurizing agent to incorporate this agent partially or totally into the porosity of the catalyst, the sulphurizing agent being a polysulphide of the general formula :

$$R - S_{(n)} - R'$$

where n is a whole number from 3 to 20 and where R' represents a hydrogen atom or another radical identical or different from radical R, these two radicals thus each representing an organic radical containing 1 to 150 carbon atoms per molecule, these radicals being chosen from the group consisting of alkyl radicals, i.e. saturated or unsaturated, straight or branched or of naphthenic type, aryl radicals, alkylaryl radicals and arylalkyl radicals, the said sulphurizing agent being used in solution in a solvent, the catalyst then optionally being dried, and in which, in a subsequent second stage, the catalyst obtained in the first stage is treated in the absence of hydrogen and in the presence of at least steam or at least one moist inert gas or moist air preferably for at least about 5 minutes in situ or ex situ at a temperature between 65 and 275°C, under a pressure between about 0.5 and 70 bars (0.05 and 7 MPa), the catalyst at this stage optionally being dried, the catalyst then being treated (second part of the second stage) during at least about one minute at a temperature of at least 275°C in the presence of hydrogen, the process being characterized in that during the first stage, about 0.1 to 10% by weight of at least one nitrogen compound, the weight being expressed as nitrogen with respect to the weight of the polysulphide or polysulphides is added.

2. A process according to Claim 1 in which during the course of the said second step one operates in the presence of a moist inert gas or moist air having a relative humidity of the order of 2 to 60% by volume at a temperature between 105 and 200°C.

3. A process according to Claim 2 in which the temperature of the said second step is between 110 and 170°C, the duration of the second step being between about 5 minutes and 10 hours.

4. A process according to Claim 1 in which during the course of the said second step one operates over a period of time between 5 minutes and 10 hours at a temperature below 200°C in the presence of a moist inert gas whose water content is between 50 and 100% (pure steam).

5. A process according to one of Claims 2 to 4 in which during the course of the said second step the said gas is moist air.

6. A process according to Claim 1 in which in the second step there is used at least water vapour superheated to a temperature above 110°C.

7. A process according to one of Claim 1 to 6 in which the said nitrogen compound is selected from the group consisting of organic or inorganic ammoniated compounds, quaternary ammonium compounds, ammonia and its derivatives, nitrites, ammonium nitrile compounds, nitro derivatives, nitrous and nitroso compounds, aromatic nitro compounds, primary, secondary and tertiary amines, diamines and polyamines, toluidines, naphthylamines, diazoic and azoic compounds, hydrazoic compounds, phenylhydrazines, polyamines, diamino derivatives of benzene, amides, amidines, nitriles, urethanes, urea, substituted ureas, aminoureas, thioureas, guanidines, cyanamides, nitrophenols, aminoalcohols, aminophenols, amino acids, and heterocyclic nitrogen compounds.

8. A process according to Claim 7 in which the said nitrogen compound is a primary, secondary or tertiary amine chosen from the group consisting of alkylamines, arylamines, alkylarylamines and arylalkylamines.

9. A process according to Claim 8 in which the nitrogen compound is selected from the group consisting of monomethylaniline, dimethylaniline, aniline, diphenylamine, triphenylamine and trimethylphenylammonium derivatives.

10. A process according to Claim 7 in which the heterocyclic compounds are selected from the group consisting of pyrroles and their homologues, pyrrolines and their homologues, pyrrolidines and their homologues, polypyrroles, dipyrrolylmethanes, porphyrins, indoles or benzopyrroles, hydroxyindoles or ketoindolines, polyindole compounds, compounds of the isoindole group, carbazole (dibenzopyrrole), piperidine and its compounds, pyridine and alkylpyridine compounds, pyridones, piperidine and derivatives, polypyridine, quinaldine, quinolinic acid and its homolgues, acridines, isoquinoline, pyrazoles and derivatives, glyoxalines, furazans, triazoles, benzotriazoles, tetrazole, diazines, pyridazine, pyrimidines, pyrazines, piperazines, diketopiperazines, triazines, compounds with a pyrimidine ring condensed on an imidazole ring, and alkaloids.

11. A process according to one of Claims 1 to 10 applied either to the treatment of a fresh catalyst, before its use, or applied to the treatment of a catalyst, before its use, the said catalyszt having been submitted to regeneration on site.

12. A process according to one of Claims 1 to 11 applied to catalysts especially for hydrocracking, cracking and conversions of hydrocarbons.